# EUROPEAN PATENT APPLICATION

(11) **EP 4 725 779 A1**
(43) Date of publication of application: **15.04.2026**
(21) Application number: 23941412.1
(22) Date of filing: 22.12.2023
(51) Int. Cl.: B60W 10/08, B60W 30/182, B60W 40/105

(54) **CONTROL METHOD AND DEVICE FOR FOUR-WHEEL DRIVE VEHICLE, AND VEHICLE**

(30) Priority: 12.06.2023 CN 202310694969
(71) Applicant: BYD Company Limited, Shenzhen, Guangdong 518118 (CN)
(72) Inventor: YANG, Dongsheng, Shenzhen, Guangdong 518118 (CN); ZHU, Haibo, Shenzhen, Guangdong 518118 (CN); TANG, Lizhong, Shenzhen, Guangdong 518118 (CN); WANG, Kuncheng, Shenzhen, Guangdong 518118 (CN); ZHU, Futang, Shenzhen, Guangdong 518118 (CN)
(74) Representative: Taor, Simon Edward William
(86) International application number: PCT/CN2023/141215
(87) International publication number: WO 2024/255192

(57) **Abstract**

Provided are a control method and apparatus for a four-wheel drive vehicle, and a vehicle. The method includes: if an auxiliary drive of the four-wheel drive vehicle meets a first forced coupling condition, controlling a wheel-end decoupler of the auxiliary drive to switch from a disengaged state to an engaged state, where the first forced coupling condition includes: A vehicle speed of the four-wheel drive vehicle is less than or equal to a first target vehicle speed, and the wheel-end decoupler is in a disengaged state. In the foregoing technical solution, when the vehicle speed of the vehicle is less than or equal to the first target vehicle speed and the wheel-end decoupler of the auxiliary drive of the four-wheel drive vehicle is in a disengaged state, the wheel-end decoupler of the auxiliary drive is controlled to switch from a disengaged state to an engaged state.

## Description

### CROSS-REFERENCE TO RELATED APPLICATIONS

The present disclosure claims priority to Chinese Patent Application No. 202310694969.2, filed with the China National Intellectual Property Administration on June 12, 2023 and entitled "CONTROL METHOD AND APPARATUS FOR FOUR-WHEEL DRIVE VEHICLE, AND VEHICLE", which is incorporated herein by reference in its entirety.

### TECHNICAL FIELD

The present disclosure relates to the vehicle field, and specifically, to a control method and apparatus for a four-wheel drive vehicle, and a vehicle.

### BACKGROUND

How to provide better user experience has always been a focus for vehicle research and development personnel. The research and development personnel are also committed to improving vehicles to meet user needs.

Acceleration performance means a capability of rapidly increasing a driving speed of a vehicle. Good acceleration performance of the vehicle brings better driving experience to a user, and improves road traffic efficiency. How to improve the acceleration performance of the vehicle is a topic well worth studying.

### SUMMARY

An object of the present disclosure is to provide a control method and apparatus for a four-wheel drive vehicle, and a vehicle, which can improve acceleration performance of the vehicle.

The present disclosure provides a control method for a four-wheel drive vehicle, including:
if an auxiliary drive of the four-wheel drive vehicle meets a first forced coupling condition, controlling a wheel-end decoupler of the auxiliary drive to switch from a disengaged state to an engaged state, where the first forced coupling condition includes: A vehicle speed of the four-wheel drive vehicle is less than or equal to a first target vehicle speed, and the wheel-end decoupler is in a disengaged state.

Optionally, the control method further includes:
if the auxiliary drive of the four-wheel drive vehicle meets a second forced coupling condition, controlling the wheel-end decoupler to switch from a disengaged state to an engaged state, where the second forced coupling condition includes: The vehicle speed of the four-wheel drive vehicle is greater than or equal to a second target vehicle speed, the wheel-end decoupler is in a disengaged state, and the second target vehicle speed is greater than the first target vehicle speed.

Optionally, the control method further includes:
if the auxiliary drive of the four-wheel drive vehicle meets a coupling enabling condition, allowing to control the wheel-end decoupler to switch from a disengaged state to an engaged state, where the coupling enabling condition includes: A rotational speed difference between connecting shafts at two ends of the wheel-end decoupler is less than a first target rotational speed difference, and an output torque of the auxiliary drive is less than or equal to a target output torque.

Optionally, the control method further includes:
if the auxiliary drive of the four-wheel drive vehicle meets a decoupling enabling condition, allowing to control the wheel-end decoupler to switch from an engaged state to a disengaged state, where the decoupling enabling condition includes: A drive motor of the auxiliary drive of the four-wheel drive vehicle does not operate, the vehicle speed of the four-wheel drive vehicle is greater than the first target vehicle speed and less than the second target vehicle speed, and a differential lock of the auxiliary drive of the four-wheel drive vehicle is in a disengaged state.

Optionally, the control method further includes:
if the auxiliary drive of the four-wheel drive vehicle meets a locking enabling condition, allowing to control a differential lock of the auxiliary drive to switch from a disengaged state to a locked state, where the locking enabling condition includes: The vehicle speed of the four-wheel drive vehicle is less than a third target vehicle speed, the rotational speed difference between the connecting shafts at the two ends of the wheel-end decoupler is less than a second target rotational speed difference, and the output torque of the auxiliary drive of the four-wheel drive vehicle is less than or equal to the target output torque.

Optionally, the first target rotational speed difference is less than the second target rotational speed difference.

Optionally, the control method further includes:
if the auxiliary drive of the four-wheel drive vehicle meets an unlocking enabling condition, controlling the differential lock of the auxiliary drive to switch from a locked state to a disengaged state, where the unlocking enabling condition includes: A differential lock unlocking command is received.

Optionally, the control method further includes:
when the vehicle speed is greater than a fourth target vehicle speed, generating the differential lock unlocking command;
or generating the differential lock unlocking command in response to receiving a trigger signal input by a user.

The present disclosure further provides a control apparatus for a four-wheel drive vehicle, including a controller. The controller is configured to perform the steps of the foregoing control method for the four-wheel drive vehicle.

The present disclosure further provides a vehicle, including a controller. During execution of the controller, the steps of the foregoing control method for the four-wheel drive vehicle are implemented.

In the foregoing technical solution, when the vehicle speed of the vehicle is less than or equal to the first target vehicle speed and the wheel-end decoupler of the auxiliary drive of the four-wheel drive vehicle is in a disengaged state, the wheel-end decoupler of the auxiliary drive is controlled to switch from a disengaged state to an engaged state. When the vehicle speed of the vehicle is less than or equal to the first target vehicle speed, there is a small difference in energy consumption during vehicle driving before and after the wheel-end decoupler of the auxiliary drive is engaged. Moreover, because the wheel-end decoupler of the auxiliary drive of the vehicle is in an engaged state when the vehicle speed is less than or equal to the first target vehicle speed, when the vehicle needs to be accelerated, engagement time of the wheel-end decoupler can be saved, acceleration performance of the vehicle can be improved, and better use experience is brought to a user.

Other features and advantages of the present disclosure are described in detail in the following description of implementations.

### BRIEF DESCRIPTION OF DRAWINGS

The accompanying drawings are intended to provide a further understanding of the present disclosure, constitute a part of this specification, and are used, together with the following description of implementations, to explain the present disclosure, but do not constitute a limitation on the present disclosure. In the accompanying drawings:
FIG. 1 is a diagram of a structure of an auxiliary drive of a four-wheel drive vehicle; and
FIG. 2 is a flowchart of a control method for a four-wheel drive vehicle according to an example embodiment of the present disclosure.

### DESCRIPTION OF EMBODIMENTS

The following describes in detail specific implementations of the present disclosure with reference to the accompanying drawings. It should be understood that the specific implementations described herein are merely used to describe and explain the present disclosure, but are not intended to limit the present disclosure.

It should be noted that all actions of obtaining a signal, information, or data in the present disclosure are conducted in compliance with corresponding data protection regulations and policies of the located country, and are performed with authorization granted by a corresponding apparatus owner.

A control method for a four-wheel drive vehicle provided in the present disclosure may be applied to a four-wheel drive vehicle. For example, the vehicle to which the control method for the four-wheel drive vehicle provided in the present disclosure is applied may include two drive systems: a main drive and an auxiliary drive. In an implementation, the main drive of the vehicle is configured to drive two front wheels of the vehicle, and the auxiliary drive of the vehicle is configured to drive two rear wheels of the vehicle. In still another implementation, the main drive of the vehicle is configured to drive two rear wheels of the vehicle, and the auxiliary drive of the vehicle is configured to drive two front wheels of the vehicle.

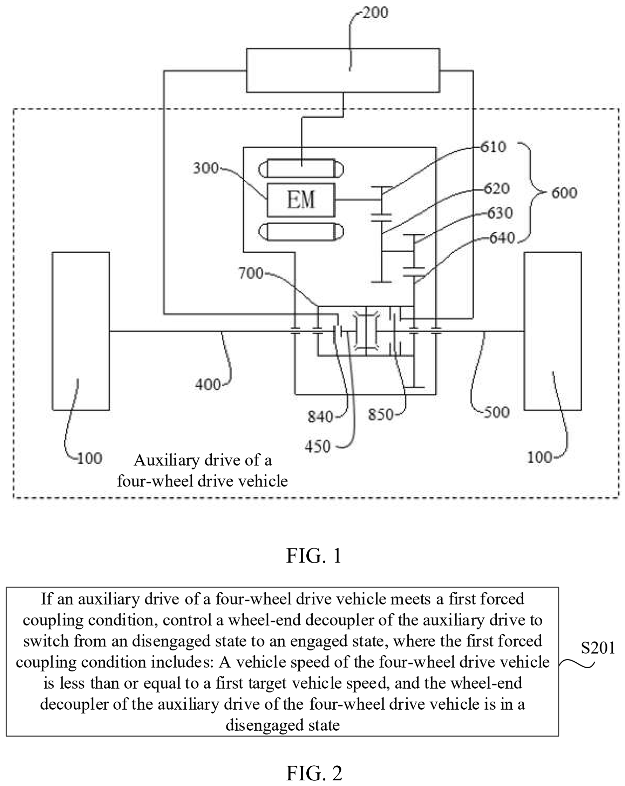

FIG. 1 is a diagram of a structure of an auxiliary drive of a four-wheel drive vehicle. As shown in FIG. 1, the auxiliary drive of the four-wheel drive vehicle includes a drive motor 300, a wheel-end decoupler 840, a differential lock 850, a wheel 100, a first half shaft 500, a second half shaft 400, a connecting shaft 450, a reducer 600, and a differential 700. The reducer 600 shown in FIG. 1 includes a first-stage reduction driving gear 610, a first-stage reduction driven gear 620, a second-stage reduction driving gear 630, and a second-stage reduction driven gear 640. As shown in FIG. 1, the controller 200 may be configured to control the drive motor 300, the wheel-end decoupler 840, and the differential lock 850 of the auxiliary drive of the four-wheel drive vehicle. The controller 200 may control the drive motor 300 to operate or not operate, control the wheel-end decoupler 840 to couple or decouple (that is, control the wheel-end decoupler to switch between an engaged state and a disengaged state), and control the differential lock 850 to be locked or disengaged. A control method for a four-wheel drive vehicle provided in the present disclosure may be applied to a four-wheel drive vehicle including the auxiliary drive shown in FIG. 1.

When the wheel-end decoupler 840 is in an engaged state and the differential lock 850 is in a disengaged state, a torque output by the drive motor 300 can be finally transmitted to the wheel 100 through the reducer 600 and the differential 700, so that the drive motor 300 can drive the wheel 100. When the wheel-end decoupler 840 is in an engaged state and the differential lock 850 is in a locked state, a half-shaft gear inside the differential 700 can be rigidly connected to a differential housing. In this case, when rotating at a same rotational speed, connecting shafts at two ends of the wheel-end decoupler 840 receive the torque output by the drive motor 300. If the wheel-end decoupler 840 is in a disengaged state and the differential lock 850 is in a disengaged state, for wheels corresponding to the two ends of the wheel-end decoupler 840, one wheel is disconnected from the differential 700 and cannot continue to transmit power through the differential 700, and the other wheel drives a differential gear to idle, cannot continue to drive the differential housing to rotate, and therefore cannot drive the drive motor 300 to rotate. This decouples the wheels from the drive motor, eliminates a drag torque between the reducer and the drive motor, reduces a drag torque during vehicle driving, and implements energy saving.

FIG. 2 is a flowchart of a control method for a four-wheel drive vehicle according to an example embodiment of the present disclosure. As shown in FIG. 2, the control method for the four-wheel drive vehicle includes step S201.

In step S201, if an auxiliary drive of the four-wheel drive vehicle meets a first forced coupling condition, a wheel-end decoupler of the auxiliary drive is controlled to switch from a disengaged state to an engaged state, where the first forced coupling condition includes: A vehicle speed of the four-wheel drive vehicle is less than or equal to a first target vehicle speed, and the wheel-end decoupler is in a disengaged state.

The first target vehicle speed may be set to be fixed by a skilled person, or may be set by a user. For example, the user may input and change a value of the first target vehicle speed by using a vehicle-mounted screen. In an implementation, the first target vehicle speed is 5 km/h. During vehicle driving, if the vehicle speed of the vehicle is low (less than the first target vehicle speed), and the vehicle is in a two-wheel drive state (that is, driven by a main drive of the four-wheel drive vehicle), when the wheel-end decoupler of the auxiliary drive is in a disengaged state, the wheel-end decoupler of the auxiliary drive may be controlled to switch from a disengaged state to an engaged state. In this way, when the user controls the vehicle to accelerate, the wheel-end decoupler of the auxiliary drive of the four-wheel drive vehicle is already in an engaged state, thereby saving time for controlling engagement of the wheel-end decoupler, and improving acceleration performance of the vehicle.

In still another implementation, before or when the vehicle is started, when the wheel-end decoupler of the auxiliary drive of the four-wheel drive vehicle is in a disengaged state, if the vehicle speed of the four-wheel drive vehicle is less than or equal to the first target vehicle speed, the wheel-end decoupler of the auxiliary drive is controlled to switch from a disengaged state to an engaged state. For example, in an application scenario, after the vehicle is started, the user may operate the vehicle to exit a parking space. In this case, the vehicle speed of the vehicle is less than the first target vehicle speed, and the wheel-end decoupler of the auxiliary drive of the vehicle is in a disengaged state. In this case, although the vehicle does not require much driving force, the wheel-end decoupler of the auxiliary drive of the four-wheel drive vehicle may be controlled to switch from a disengaged state to an engaged state. In this way, when the user controls the vehicle to accelerate, the vehicle requires much driving force, and the vehicle needs to switch from a two-wheel drive state to a four-wheel drive state, the wheel-end decoupler of the auxiliary drive of the four-wheel drive vehicle is already in an engaged state. This saves time for controlling engagement of the wheel-end decoupler, and improves acceleration performance of the vehicle.

In the foregoing technical solution, when the vehicle speed of the vehicle is less than or equal to the first target vehicle speed and the wheel-end decoupler of the auxiliary drive of the four-wheel drive vehicle is in a disengaged state, the wheel-end decoupler of the auxiliary drive is controlled to switch from a disengaged state to an engaged state. When the vehicle speed of the vehicle is less than or equal to the first target vehicle speed, there is a small difference in energy consumption during vehicle driving before and after the wheel-end decoupler of the auxiliary drive is engaged. Moreover, because the wheel-end decoupler of the auxiliary drive of the vehicle is in an engaged state when the vehicle speed is less than or equal to the first target vehicle speed, when the vehicle needs to be accelerated, engagement time of the wheel-end decoupler can be saved, acceleration performance of the vehicle can be improved, and better use experience is brought to a user.

In still another embodiment, the control method further includes:
if the auxiliary drive of the four-wheel drive vehicle meets a second forced coupling condition, controlling the wheel-end decoupler to switch from a disengaged state to an engaged state, where the second forced coupling condition includes: The vehicle speed of the four-wheel drive vehicle is greater than or equal to a second target vehicle speed, the wheel-end decoupler is in a disengaged state, and the second target vehicle speed is greater than the first target vehicle speed.

The second target vehicle speed may be set by the skilled person based on experience, or may be set by the user. For example, in an implementation, the second target vehicle speed is 150 km/h.

If the wheel-end decoupler of the auxiliary drive of the four-wheel drive vehicle is in a disengaged state, an output end of a differential of the auxiliary drive of the vehicle is in an idling state. If the wheel-end decoupler of the auxiliary drive is in a disengaged state and the vehicle speed is relatively high (for example, the vehicle speed is greater than the second target vehicle speed), the output end of the differential of the auxiliary drive of the vehicle is in a high-speed idling state, but a main reducer does not rotate, and cannot sling lubrication oil. This may lead to overheating or excessive wear of the differential. To avoid damage to the differential of the auxiliary drive of the vehicle, the skilled person may set the second target vehicle speed based on experience, and control engagement of the wheel-end decoupler of the auxiliary drive of the vehicle if the vehicle speed is greater than or equal to the second target vehicle speed during vehicle driving.

In this embodiment, if the vehicle speed of the vehicle is greater than or equal to the second target vehicle speed, the wheel-end decoupler is forced to engage, to avoid overheating or excessive wear of the differential due to high-speed idling of the output end of the differential. This reduces a possibility of vehicle part failure and extends a service life of the vehicle.

It should be noted that, in an implementation, the first forced coupling condition further includes that a drive motor of the auxiliary drive of the four-wheel drive vehicle is in a non-operating state. For example, when the four-wheel drive vehicle travels at a low speed in a two-wheel drive operating state, the drive motor of the auxiliary drive of the four-wheel drive vehicle is in a non-operating state, the wheel-end decoupler of the auxiliary drive is in a disengaged state, and the vehicle speed of the vehicle is less than or equal to the first target vehicle speed, the wheel-end decoupler of the auxiliary drive of the four-wheel drive vehicle may be controlled to switch from a disengaged state to an engaged state. In this way, after the wheel-end decoupler of the auxiliary drive of the four-wheel drive vehicle is controlled to switch to an engaged state, when the user wants to control the vehicle to accelerate, engagement time of the wheel-end decoupler of the auxiliary drive of the vehicle is saved, so that the vehicle can quickly switch from a two-wheel drive operating state to a four-wheel drive operating state, thereby improving acceleration performance of the vehicle and improving user experience.

In still another implementation, the second forced coupling condition further includes that the drive motor of the auxiliary drive of the four-wheel drive vehicle is in a non-operating state. For example, when the drive motor of the auxiliary drive of the four-wheel drive vehicle is in a non-operating state, the wheel-end decoupler of the auxiliary drive is in a disengaged state, and the vehicle speed of the vehicle is greater than or equal to the second target vehicle speed, the wheel-end decoupler of the auxiliary drive of the four-wheel drive vehicle may be controlled to switch from a disengaged state to an engaged state, to avoid overheating or damage of the differential due to high-speed idling of the output end of the differential.

In still another embodiment, the control method further includes:
if the auxiliary drive of the four-wheel drive vehicle meets a coupling enabling condition, allowing to control the wheel-end decoupler to switch from a disengaged state to an engaged state, where the coupling enabling condition includes: A rotational speed difference between connecting shafts at two ends of the wheel-end decoupler is less than a first target rotational speed difference, and an output torque of the auxiliary drive is less than or equal to a target output torque.

The skilled person may set the first target rotational speed difference and the target output torque based on experience. During vehicle driving, if the wheel-end decoupler is in a disengaged state, and the auxiliary drive of the four-wheel drive vehicle does not meet the coupling enabling condition, an engagement process of the wheel-end decoupler may not be smooth enough, bringing poor use experience to the user. Therefore, in an implementation, the auxiliary drive of the four-wheel drive vehicle needs to meet the coupling enabling condition, and then the wheel-end decoupler of the auxiliary drive is controlled to engage. In an implementation, the connecting shafts at the two ends of the wheel-end decoupler may be a second half shaft 400 and a connecting shaft 450 at the two ends of the thumb wheel-end decoupler 840. The output torque of the auxiliary drive may be a torque output by the drive motor of the auxiliary drive.

It should be noted that, in an implementation, if the auxiliary drive of the four-wheel drive vehicle meets the first forced coupling condition or meets the second forced coupling condition, the wheel-end decoupler of the auxiliary drive may be forced to switch from a disengaged state to an engaged state. That is, if the auxiliary drive of the four-wheel drive vehicle meets the first forced coupling condition or meets the second forced coupling condition, even if the auxiliary drive of the vehicle does not meet the coupling enabling condition, the wheel-end decoupler of the auxiliary drive is forced to switch from a disengaged state to an engaged state.

If the auxiliary drive of the four-wheel drive vehicle neither meets the first forced coupling condition nor meets the second forced coupling condition, the coupling enabling condition needs to be met before the wheel-end decoupler is allowed to be controlled to switch from a disengaged state to an engaged state. For example, after in response to receiving a command for controlling coupling of the wheel-end decoupler of the auxiliary drive generated through triggering by the user, the auxiliary drive of the four-wheel drive vehicle needs to meet the coupling enabling condition before the wheel-end decoupler of the auxiliary drive is controlled to switch from a disengaged state to an engaged state. For another example, based on determining of a driving condition of the vehicle, when the wheel-end decoupler of the auxiliary drive of the vehicle needs to be controlled to couple (excluding two cases in which the auxiliary drive meets the first forced coupling condition and the auxiliary drive meets the second forced coupling condition), if the auxiliary drive of the vehicle meets the coupling enabling condition, the wheel-end decoupler of the auxiliary drive is controlled to switch from a disengaged state to an engaged state.

In this embodiment, if the auxiliary drive of the four-wheel drive vehicle meets the coupling enabling condition, the wheel-end decoupler is allowed to be controlled to switch from a disengaged state to an engaged state. In this way, the engagement process of the wheel-end decoupler may be smoother, thereby bringing better use experience to the user.

In still another embodiment, the control method further includes:
if the auxiliary drive of the four-wheel drive vehicle meets a decoupling enabling condition, allowing to control the wheel-end decoupler to switch from an engaged state to a disengaged state, where the decoupling enabling condition includes: A drive motor of the auxiliary drive of the four-wheel drive vehicle does not operate, the vehicle speed of the four-wheel drive vehicle is greater than the first target vehicle speed and less than the second target vehicle speed, and a differential lock of the auxiliary drive of the four-wheel drive vehicle is in a disengaged state.

When the drive motor of the auxiliary drive of the four-wheel drive vehicle operates, the torque output by the drive motor needs to be used to drive a wheel. Therefore, the wheel-end decoupler needs to remain in an engaged state to allow the wheel to be driven by the drive motor. To avoid a case in which resistance from one side of the wheel-end decoupler continues to transmit to the motor after decoupling of the wheel-end decoupler (that is, the wheel-end decoupler switches from an engaged state to a disengaged state), in an implementation, the wheel-end decoupler is allowed to decouple only if the differential lock of the auxiliary drive of the four-wheel drive vehicle is in a disengaged state.

For example, after in response to receiving a command for controlling decoupling of the wheel-end decoupler of the auxiliary drive generated through triggering by the user, the auxiliary drive of the four-wheel drive vehicle needs to meet the decoupling enabling condition before the wheel-end decoupler of the auxiliary drive is controlled to switch from an engaged state to a disengaged state. For another example, based on determining of the driving condition of the vehicle, when the wheel-end decoupler of the auxiliary drive of the vehicle needs to be controlled to decouple, if the auxiliary drive of the vehicle meets the decoupling enabling condition, the wheel-end decoupler of the auxiliary drive is controlled to switch from an engaged state to a disengaged state.

If the wheel-end decoupler is in an engaged state, but the auxiliary drive of the four-wheel drive vehicle does not meet the decoupling enabling condition, the wheel-end decoupler is not allowed to be controlled to switch from an engaged state to a disengaged state.

In this embodiment, if the wheel-end decoupler of the auxiliary drive of the four-wheel drive vehicle is in an engaged state, and the auxiliary drive of the four-wheel drive vehicle meets the decoupling enabling condition, the wheel-end decoupler is allowed to be controlled to switch from an engaged state to a disengaged state. This optimizes control logic for controlling the wheel-end decoupler to decouple. In addition, the wheel-end decoupler is allowed to decouple only if the drive motor of the auxiliary drive does not operate, thereby avoiding waste of energy.

In still another embodiment, the control method further includes:
if the auxiliary drive of the four-wheel drive vehicle meets a locking enabling condition, allowing to control a differential lock of the auxiliary drive to switch from a disengaged state to a locked state, where the locking enabling condition includes: The vehicle speed of the four-wheel drive vehicle is less than a third target vehicle speed, the rotational speed difference between the connecting shafts at the two ends of the wheel-end decoupler is less than a second target rotational speed difference, and the output torque of the auxiliary drive of the four-wheel drive vehicle is less than or equal to the target output torque.

In an implementation, the third target vehicle speed is less than the first target vehicle speed. In a process in which the vehicle speed decreases from the first target vehicle speed, the wheel-end decoupler is forced to engage. In this case, the differential lock is allowed to be locked only after the vehicle speed continues to decrease to less than the third target vehicle speed, avoiding a case in which the wheel-end decoupler is not engaged but the differential is locked.

The third target vehicle speed and the second target rotational speed difference may be set by the skilled person based on experience. To make a process of switching the differential lock of the auxiliary drive from a disengaged state to a locked state smoother, the differential lock is allowed to switch from a disengaged state to a locked state only if the rotational speed difference between the connecting shafts at the two ends of the wheel-end decoupler is less than the second target rotational speed difference, and the output torque of the auxiliary drive of the four-wheel drive vehicle is less than or equal to the target output torque.

For example, after in response to receiving the command for controlling locking of the differential lock of the auxiliary drive that is triggered and generated by the user, the auxiliary drive of the four-wheel drive vehicle needs to meet the locking enabling condition before the differential lock of the auxiliary drive is controlled to switch from a disengaged state to a locked state. For another example, based on determining of the driving condition of the vehicle, when the differential lock of the auxiliary drive of the vehicle needs to be controlled to be locked, if the auxiliary drive of the vehicle meets the locking enabling condition, the differential lock of the auxiliary drive is controlled to switch from a disengaged state to a locked state.

If the auxiliary drive of the four-wheel drive vehicle does not meet the locking enabling condition, the differential lock of the auxiliary drive is not allowed to be locked.

In this embodiment, the differential lock is allowed to be controlled to be locked only if the auxiliary drive of the four-wheel drive vehicle meets the locking enabling condition, thereby improving smoothness of locking of the differential lock.

In still another embodiment, the first target rotational speed difference is less than the second target rotational speed difference.

That the rotational speed difference between the connecting shafts at the two ends of the wheel-end decoupler is less than the first target rotational speed difference is one of the conditions that needs to be met to allow to control the wheel-end decoupler to switch from a disengaged state to an engaged state. To ensure smooth power switching, the rotational speed difference between the connecting shafts at the two ends of the wheel-end decoupler cannot be excessively large. Therefore, in an implementation, the first target rotational speed difference is set to a relatively small value. The skilled person may set a specific value of the first target rotational speed difference based on the foregoing idea and experience. However, that the rotational speed difference between the connecting shafts at the two ends of the wheel-end decoupler is less than the second target rotational speed difference is one of the conditions for allowing to control the differential lock of the auxiliary drive to switch from a disengaged state to a locked state. When the differential lock of the auxiliary drive of the four-wheel drive vehicle needs to be locked, the vehicle is often approximately stationary. In this case, the user is somewhat mentally prepared for a large rotational speed difference between the connecting shafts at the two ends of the wheel-end decoupler of the auxiliary drive. Therefore, when the rotational speed difference between the connecting shafts at the two ends of the wheel-end decoupler is relatively large (greater than the first target rotational speed difference and less than the second target rotational speed difference), the differential lock is controlled to be locked, ensuring use safety of the vehicle.

In this embodiment, the first target rotational speed difference is less than the second target rotational speed difference, so that control logic of the auxiliary drive of the four-wheel drive vehicle is optimized, and better use experience can be provided for the user.

In still another embodiment, the control method further includes:
if the auxiliary drive of the four-wheel drive vehicle meets an unlocking enabling condition, controlling the differential lock of the auxiliary drive to switch from a locked state to a disengaged state, where the unlocking enabling condition includes: A differential lock unlocking command is received.

When the auxiliary drive of the four-wheel drive vehicle meets the unlocking enabling condition, the differential lock of the auxiliary drive may be controlled to switch from a locked state to a disengaged state. This prevents the differential lock from being in a locked state if the differential lock needs to be in a disengaged state, thereby improving use safety of the vehicle.

In still another embodiment, the control method further includes:
when the vehicle speed is greater than a fourth target vehicle speed, generating the differential lock unlocking command;
or generating the differential lock unlocking command in response to receiving a trigger signal input by the user.

During vehicle driving, when the differential lock is locked, if the vehicle speed is greater than a specific speed, it is difficult for the vehicle to steer, resulting in a safety risk in driving of the vehicle. To enable the vehicle to travel safely, when the vehicle speed of the vehicle is greater than this speed, the differential lock unlocking command may be generated to control the differential lock of the auxiliary drive of the vehicle to switch from a locked state to a disengaged state. When a value of the fourth target vehicle speed is set, this speed may be determined as the fourth target vehicle speed. A specific value of the fourth target vehicle speed may be set by the skilled person based on experience.

When the trigger signal input by the user is received, it indicates that the user expects to switch the differential lock from a locked state to a disengaged state. To ensure driving safety of the vehicle, the differential lock unlocking command may be generated, and the differential lock of the auxiliary drive of the vehicle is controlled to switch from a locked state to a disengaged state.

In this embodiment, when the vehicle speed of the vehicle is greater than the fourth target vehicle speed or the trigger signal input by the user is received, the differential lock unlocking command is generated. In this way, the differential lock of the auxiliary drive may be controlled to switch from a locked state to a disengaged state, thereby ensuring safe driving of the vehicle.

The present disclosure further provides a control apparatus for a four-wheel drive vehicle. The control apparatus for the four-wheel drive vehicle includes a controller, and the controller is configured to perform the steps of the foregoing control method for the four-wheel drive vehicle.

The present disclosure further provides a vehicle, including a controller. During execution of the controller, the steps of the foregoing control method for the four-wheel drive vehicle are implemented.

The foregoing describes preferred implementations of the present disclosure in detail with reference to the accompanying drawings. However, the present disclosure is not limited to specific details in the foregoing implementations. Within the technical concept scope of the present disclosure, a plurality of simple variations may be made to the technical solutions of the present disclosure, and all these simple variations fall within the protection scope of the present disclosure.

In addition, it should be noted that the specific technical features described in the foregoing specific implementations may be combined in any appropriate manner when there is no contradiction. To avoid unnecessary repetition, various possible combination manners are not separately described in the present disclosure.

In addition, different implementations of the present disclosure may be randomly combined, and should also be considered as disclosed in the present disclosure, provided that such combinations do not depart from the idea of the present disclosure.

## Claims

1. A control method for a four-wheel drive vehicle, comprising:
if an auxiliary drive of the four-wheel drive vehicle meets a first forced coupling condition, controlling a wheel-end decoupler of the auxiliary drive to switch from a disengaged state to an engaged state, wherein the first forced coupling condition comprises: a vehicle speed of the four-wheel drive vehicle is less than or equal to a first target vehicle speed, and the wheel-end decoupler is in a disengaged state.

2. The control method according to claim 1, wherein the control method further comprises:
if the auxiliary drive of the four-wheel drive vehicle meets a second forced coupling condition, controlling the wheel-end decoupler to switch from a disengaged state to an engaged state, wherein the second forced coupling condition comprises: the vehicle speed of the four-wheel drive vehicle is greater than or equal to a second target vehicle speed, the wheel-end decoupler is in a disengaged state, and the second target vehicle speed is greater than the first target vehicle speed.

3. The control method according to claim 1 or 2, wherein the control method further comprises:
if the auxiliary drive of the four-wheel drive vehicle meets a coupling enabling condition, allowing to control the wheel-end decoupler to switch from a disengaged state to an engaged state, wherein the coupling enabling condition comprises: a rotational speed difference between connecting shafts at two ends of the wheel-end decoupler is less than a first target rotational speed difference, and an output torque of the auxiliary drive is less than or equal to a target output torque.

4. The control method according to any one of claims 1 to 3, wherein the control method further comprises:
if the auxiliary drive of the four-wheel drive vehicle meets a decoupling enabling condition, allowing to control the wheel-end decoupler to switch from an engaged state to a disengaged state, wherein the decoupling enabling condition comprises: a drive motor of the auxiliary drive of the four-wheel drive vehicle does not operate, the vehicle speed of the four-wheel drive vehicle is greater than the first target vehicle speed and less than the second target vehicle speed, and a differential lock of the auxiliary drive of the four-wheel drive vehicle is in a disengaged state.

5. The control method according to claim 3, wherein the control method further comprises:
if the auxiliary drive of the four-wheel drive vehicle meets a locking enabling condition, allowing to control a differential lock of the auxiliary drive to switch from a disengaged state to a locked state, wherein the locking enabling condition comprises: the vehicle speed of the four-wheel drive vehicle is less than a third target vehicle speed, the rotational speed difference between the connecting shafts at the two ends of the wheel-end decoupler is less than a second target rotational speed difference, and the output torque of the auxiliary drive of the four-wheel drive vehicle is less than or equal to the target output torque.

6. The control method according to claim 5, wherein the first target rotational speed difference is less than the second target rotational speed difference.

7. The control method according to any one of claims 1 to 6, wherein the control method further comprises:
if the auxiliary drive of the four-wheel drive vehicle meets an unlocking enabling condition, controlling the differential lock of the auxiliary drive to switch from a locked state to a disengaged state, wherein the unlocking enabling condition comprises: a differential lock unlocking command is received.

8. The control method according to claim 7, wherein the control method further comprises:
when the vehicle speed is greater than a fourth target vehicle speed, generating the differential lock unlocking command;
or,
generating the differential lock unlocking command in response to receiving a trigger signal input by a user.

9. A control apparatus for a four-wheel drive vehicle, comprising a controller, wherein the controller is configured to perform the steps of the method according to any one of claims 1 to 8.

10. A vehicle, comprising a controller, wherein during execution of the controller, the steps of the method according to any one of claims 1 to 8 are implemented.
